# EUROPEAN PATENT SPECIFICATION

(11) **EP 3 825 539 B1**
(45) Date of publication and mention of the grant of the patent: **24.07.2024**
(21) Application number: 19863722.5
(22) Date of filing: 24.06.2019
(51) Int. Cl.: F02N 19/00, F02N 11/08, F02N 11/04, F02B 61/02, F02D 41/00, F02D 41/06

(54) **ENGINE RESTART DEVICE**
MOTORNEUSTARTVORRICHTUNG
DISPOSITIF DE REDÉMARRAGE DE MOTEUR

(30) Priority: 21.09.2018 JP 2018176899
(43) Date of publication of application: 26.05.2021
(73) Proprietor: HONDA MOTOR CO., LTD., Minato-ku Tokyo 107-8556 (JP)
(72) Inventor: OSAWA Toshifumi, Wako-shi, Saitama 351-0193 (JP); TAMANOI Ryusuke, Wako-shi, Saitama 351-0193 (JP)
(74) Representative: Beder, Jens
(86) International application number: PCT/JP2019/024971
(87) International publication number: WO 2020/059233

(56) References cited:
- EP-A1- 1 433 944
- EP-A1- 2 881 566
- EP-A1- 3 002 450
- WO-A1-2014/122857
- DE-B4- 102006 010 710
- GB-A- 2 560 171
- JP-A- 2002 213 592
- JP-A- 2011 080 480
- JP-A- 2018 053 772

## Description

### Technical Field

The present invention relates to an engine restart device for restarting an engine after automatic stop, and more particularly to an engine restart device for swinging back the engine after automatic stop and then restarting the engine, thereby improving startability.

### Background Art

From the viewpoint of environmental consideration and energy saving, in particular, in order to suppress exhaust gas and fuel consumption at idling, there is known an engine stop start control device which automatically stops the engine when the vehicle is stopped, and automatically restarts the engine to start the vehicle when the throttle grip is operated from the stopped state and an instruction of start is given (Patent Literature 1).

On the other hand, there is known an engine starting device in which a starter motor (cell motor) is once reversely rotated in a direction of decreasing load torque, and then a cell motor is rotated in a normal engine rotation direction (normal rotation direction) in order to reduce the effect of load torque at the time of starting (Patent Literature 2).

Patent Literature 3 discloses a technique in which the crank angle position is moved by reverse rotation in accordance with the crank angle position of the engine which has stopped in accordance with the stop of the vehicle in advance of the subsequent start operation, thereby enabling the engine to be started quickly by the start operation.

Patent Literatures 4 to 10 are also interesting documents of the prior art.

### Citation List

### Patent Literature

Patent Literature 1: JP 63 -75323 A
Patent Literature 2: JP 7- 71350 A
Patent Literature 3: JP 4055973 B2
Patent Literature 4: EP 2 881 566 A1
Patent Literature 5: EP 3 002 450 A1
Patent Literature 6: WO 2014/122857 A1
Patent Literature 7: GB 2 560 171 A
Patent Literature 8: EP 1 433 944 A1
Patent Literature 9: DE 10 2006 010710 B4
Patent Literature 10: JP 2011 080 480 A

### Summary of Invention

### Technical Problem

In an engine restart device for improving startability by controlling the rotation direction of a cell motor so as to once reversely rotate the crankshaft and then normally rotate the crankshaft, when the crankshaft is reversely rotated after the engine is stopped, a large override torque is usually generated in front of a compression top dead center, and since this torque exceeds a driving torque that reversely rotates the engine, the engine can be stopped at a position in front of the compression top dead center.

However, particularly when the vehicle travels at high altitudes, the atmospheric pressure decreases, and accordingly, the override torque at the compression top dead center decreases. Therefore, the reverse rotation torque exceeds the override torque, the engine cannot be stopped at a position in front of the compression top dead center, and the reverse rotation may be continued.

An object of the present invention is to solve the above technical problem and provide an engine restart device capable of stopping an engine at a position in front of a compression top dead center regardless of fluctuation of an atmospheric pressure when the engine is reversely rotated after the engine is stopped to prepare for the next start.

### Solution to Problem

In order to achieve the above object, in the present invention, the engine restart device according to claim 1 is provided.

Preferred embodiments are described in the dependent claims.

### Advantageous Effects of Invention

(1) The engine restart device of the present invention includes an atmospheric pressure measuring unit (252) for measuring an atmospheric pressure, and the controller (160) controls a speed at which the crankshaft reversely rotates according to the measurement result of the atmospheric pressure. Therefore, it is possible to prevent the crankshaft from continuously reversely rotating after the idle stop at a high altitude or during the swing back at the normal engine start.
(2) The engine restart device of the present invention is characterized in that the starter is a three-phase brushless starter/generator (171), and the controller (160) changes the drive duty ratio of the starter based on the measurement result of the atmospheric pressure. Therefore, the reverse rotation speed and the reverse rotation torque during the swing back can be freely controlled.
(3) The engine restart device of the present invention includes a duty ratio map (307) for storing the relationship between the atmospheric pressure and the drive duty ratio, and the controller (160) determines the drive duty ratio by referring to the duty ratio map based on the measurement result of the atmospheric pressure. Therefore, the crankshaft can be accurately reversely rotated to a predetermined position after the idle stop, and the engine can be rapidly restarted thereafter.
   Therefore, the process of calculating the correspondence relationship between the atmospheric pressure and the drive duty ratio every time becomes unnecessary, and the swing back can be performed with a low processing load of referring to the duty ratio map.
(4) The engine restart device of the present invention is characterized in that the controller (160) reduces the speed at which the crankshaft reversely rotates as the atmospheric pressure decreases. Therefore, the swing back can be appropriately performed according to the state of the atmospheric pressure.

### Brief Description of Drawings

Fig. 1 is a functional block diagram of an essential part of a starting device according to an embodiment of the present invention.
Fig. 2 is an overall side view of a scooter type motorcycle equipped with an engine restart device to which the present invention is applied.
Fig. 3 is a plan view around an instrument panel of the scooter type motorcycle.
Fig. 4 is a schematic diagram showing an outline of a seating detection device.
Fig. 5 is a cross-sectional view taken along a line A-A of an engine shown in Fig. 2.
Fig. 6 is a side cross-sectional view of a periphery of a cylinder head of the engine.
Fig. 7 is a front cross-sectional view of the periphery of the cylinder head of the engine.
Fig. 8 is a rear cross-sectional view of the periphery of the cylinder head of the engine.
Fig. 9 is a drive-side cross-sectional view of an automatic transmission.
Fig. 10 is a driven-side cross-sectional view of the automatic transmission.
Fig. 11 is a cross-sectional view showing an oil circulation device.
Fig. 12 is a side cross-sectional view showing an arrangement of a crank sensor.
Fig. 13 is a front cross-sectional view showing an arrangement of the crank sensor.
Fig. 14 is a block diagram showing an overall configuration of a start/stop control system according to an embodiment of the present invention.
Fig. 15 is a block diagram (part 1) showing a function of a main control device.
Fig. 16 is a block diagram (part 2) showing a function of the main control device.
Fig. 17 is a diagram showing main operations of the main control device as a list.
Fig. 18 is a diagram showing conditions for switching operation modes and operation patterns.
Fig. 19 is a diagram showing a relationship between a crank angle position and an override torque.
Fig. 20 is a diagram showing a relationship between an override torque and an atmospheric pressure.
Fig. 21 is a flowchart showing the operation of the present invention.

### Description of Embodiments

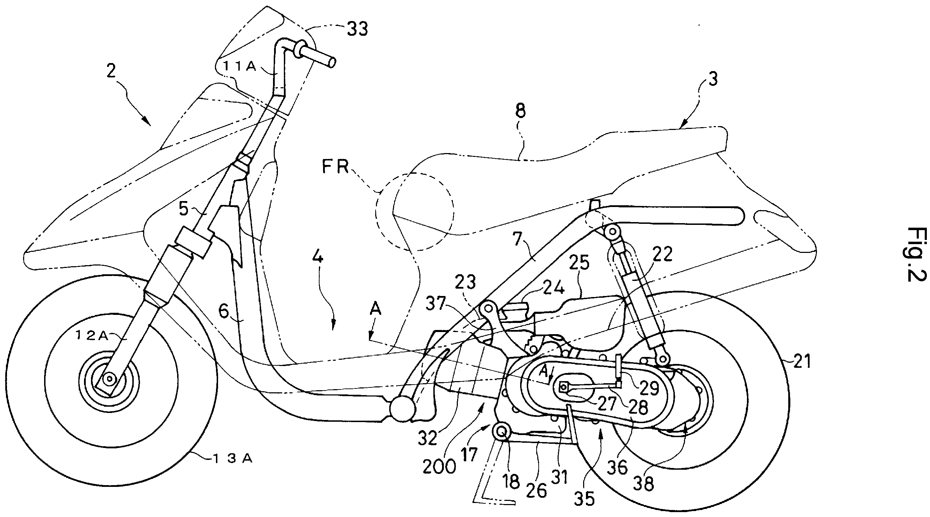

Hereinafter, embodiments of the present invention will be described in detail with reference to the drawings. Fig. 2 is an overall side view of a motorcycle equipped with an engine starting device according to an embodiment of the present invention. A vehicle body front part 2 and a vehicle body rear part 3 are connected via a low floor part 4, and a vehicle body frame forming a skeleton of the vehicle body is generally constituted of a down tube 6 and a main pipe 7. A fuel tank and a luggage box (both are not shown) are supported by the main pipe 7, and a seat 8 is arranged above the main pipe 7. The seat 8 can also serve as a lid of the luggage box provided at the lower portion thereof, and is rotatably supported by a hinge mechanism (not shown) provided at the front part FR for opening and closing the luggage box.

On the other hand, in the vehicle body front part 2, the down tube 6 is provided with a steering head 5, and a front fork 12Ais pivotally supported by the steering head 5. A handle 11A is attached to a portion extending upward from the front fork 12A, and a front wheel 13A is pivotally supported at the tip of a portion extending downward. The upper portion of the handle 11A is covered with a handle cover 33 serving also as an instrument panel.

In the middle of the main pipe 7, a link member (hanger) 37 is pivotally supported, and a swing unit 17 is swingably connected and supported to the main pipe 7 by the hanger 37. The swing unit 17 is mounted with a four-cycle engine 200 of a single cylinder on its front part. From the engine 200 to the rear, a belt-type continuously variable transmission 35 is constituted, and a speed reduction mechanism 38 is connected to the continuously variable transmission 35 via a centrifugal clutch mechanism to be described later. The speed reduction mechanism 38 is pivotally supported by a rear wheel 21. A rear cushion 22 is interposed between the upper end of the speed reduction mechanism 38 and the upper bent portion of the main pipe 7. To a front part of the swing unit 17, an intake pipe 23 extended from a cylinder head 32 of the engine 200 is connected, and further, to the intake pipe 23, a carburetor 24 and an air cleaner 25 connected to the carburetor 24 are arranged.

Abase end of a kick arm 28 is fixed to a kick shaft 27 projecting from a transmission case cover 36 of the belt-type continuously variable transmission 35, and a kick pedal 29 is provided at a tip end of the kick arm 28. A pivot shaft 18 provided at the lower portion of a swing unit case 31 is pivotally mounted with a main stand 26, and the main stand 26 is erected when parking (shown with dashed lines).

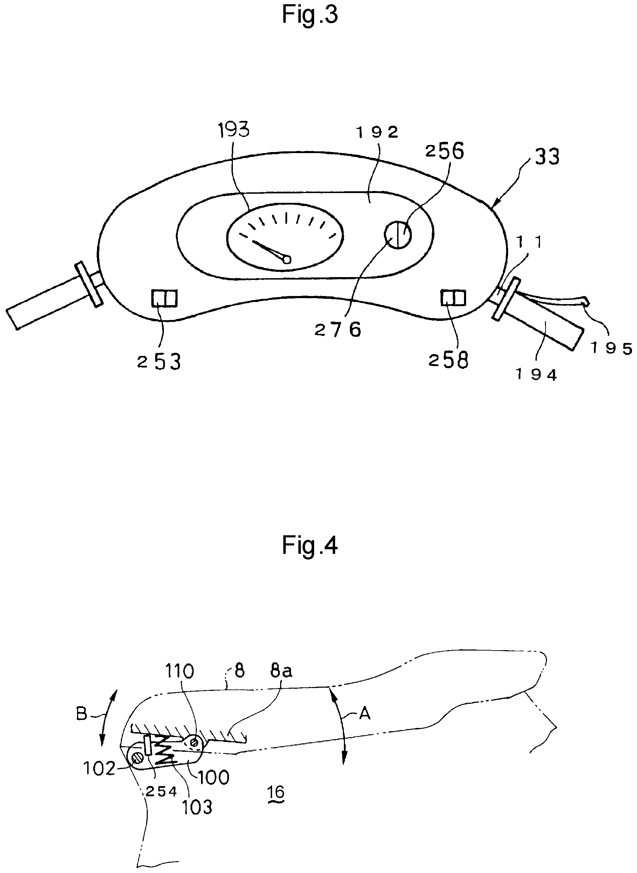

Fig. 3 is a plan view around the instrument panel of the motorcycle, and in the instrument panel 192 of the handle cover 33, a standby indicator 256 and a battery indicator 276 are provided together with a speedometer 193. The standby indicator 256 blinks when the engine is stopped during engine stop-and-start control, as will be described in more detail below, to alert the driver that the engine can be started and the motorcycle can be started as soon as the throttle is opened. The battery indicator 276 is lighted when the battery voltage is lowered to warn the driver of insufficient charge of the battery.

The handle cover 33 is provided with an idle switch 253 for permitting or restricting idling and a starter switch 258 for starting a starter motor (cell motor). At the right end of the handle 11A, a throttle grip 194 and a brake lever 195 are provided. Note that, although horn switches and winker switches are provided at the base portions of the left and right throttle grips in the same manner as the conventional two-wheeled vehicle, they are not shown here.

Next, a constitution of a hinge portion for opening and closing the seat 8 and a seating switch arranged in the vicinity of the hinge portion will be described. Fig. 4 is a schematic diagram showing a structure of the hinge portion for opening and closing the seat 8. In the figure, the seat 8 serving also as a lid of the luggage box 16 is openably and closably provided in a direction of an arrow A with respect to the luggage box 16. In order to make the seat 8 openable and closable, the luggage box 16 is provided with a hinge shaft 102 and a link member 100 swingable around the hinge shaft 102. On the other hand, the other end of the link member 100, that is, the end on the side opposite to the side connected to the hinge shaft 102, is rotatably connected to a second hinge shaft 110 provided on a frame 8a of the seat 8. Therefore, the seat 8 can swing in the direction of the arrow A around the hinge shaft 102 and also swing in a direction of an arrow B around the second hinge shaft 110.

A spring 103 is interposed between the link member 100 and the frame 8a to bias the seat 8 clockwise around the second hinge shaft 110 in the figure. Further, a seating switch 254 is provided between the link member 100 and the frame 8a, and when the driver is seated and the frame 8a is rotated by a predetermined amount around the second hinge shaft 110 in the counterclockwise direction in the figure, the switch is turned on to detect the seating state.

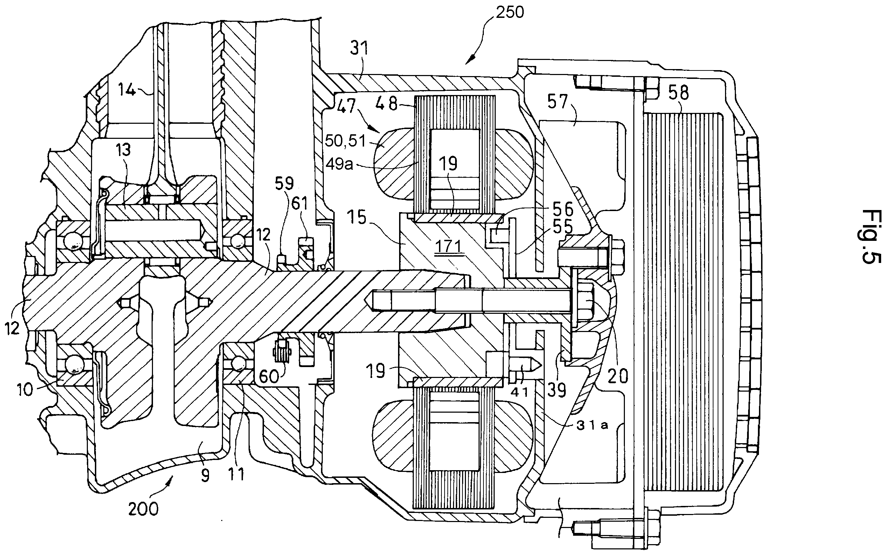

Next, the engine 200 will be described in detail. Fig. 5 is a cross-sectional view of a starting and generating device connected to the crankshaft of the engine, taken along a line A-A in Fig. 2. In Fig. 5, the swing unit case 31 is provided with a crankshaft 12 rotatably supported by main bearings 10 and 11, and the crankshaft 12 is connected to a connecting rod 14 via a crank pin 13. At one end of the crankshaft 12 extending from a crank box 9, an inner rotor 15 constituting a brushless ACG starter motor 171 which is a main portion of a starting and generating device 250 is provided. The inner rotor 15, together with a flange member 39, is fixed to one end of the crankshaft 12 by a bolt 20.

The outer peripheral surface of the inner rotor 15 is fitted with a permanent magnet 19. The permanent magnet 19 is, for example, a neodymium iron boron system, and is provided at six locations at equiangular intervals with the crankshaft 12 as a center. A stator core 48 of an outer stator 47 disposed on the outer periphery of the inner rotor 15 is fixed to the swing unit case 31. A yoke 49a of the stator core 49 is wound with a power generating coil 50 and a starting coil 51.

The flange member 39 is mounted with a radiator fan 57, and a radiator 58 is provided opposed to the radiator fan 57. On the crankshaft 12, a sprocket 59 is fixed between the inner rotor 15 and the main bearing 11, and the sprocket 59 is hooked with a chain 60 for obtaining power for driving a camshaft (not shown) from the crankshaft 12. Note that, the sprocket 59 is integrally formed with a gear 61 for transmitting power to a pump for circulating lubricating oil.

On the inside of one end side surface 31a of the swing unit case 31, a substrate 55 is fixed in parallel with the crankshaft 12 by a screw 41, and on the inside surface of the substrate 55, a rotor sensor 56 for detecting the permanent magnet 19 mounted on the outer peripheral surface of the inner rotor 15 is provided. The rotor sensor 56 is constituted by arranging a plurality of Hall elements coaxially with the inner rotor 15 in an arc shape with a prescribed gap.

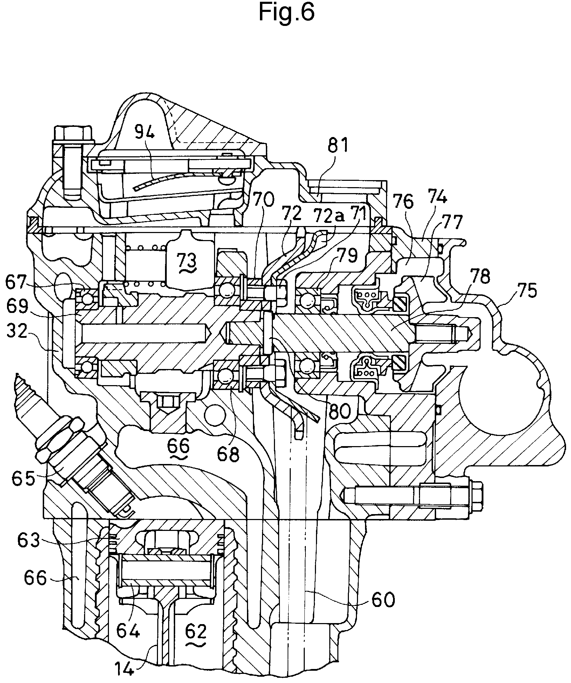

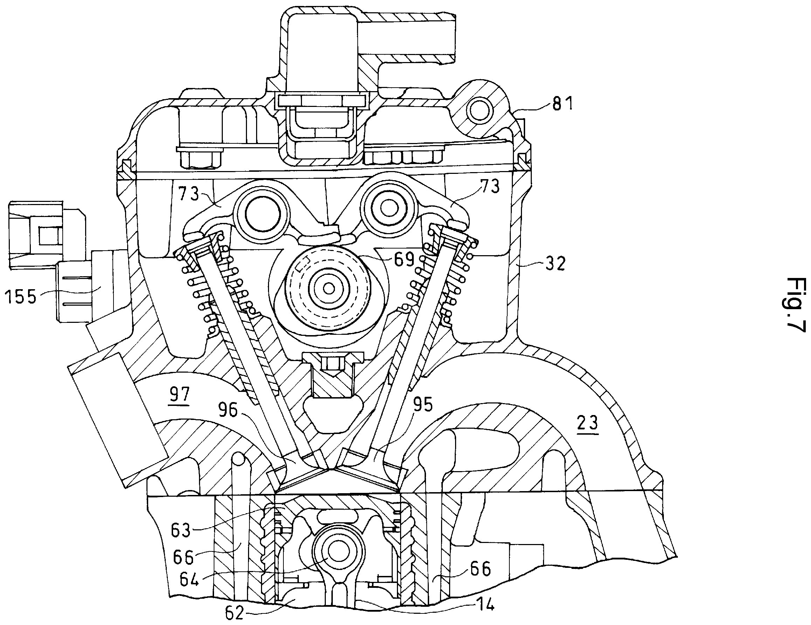

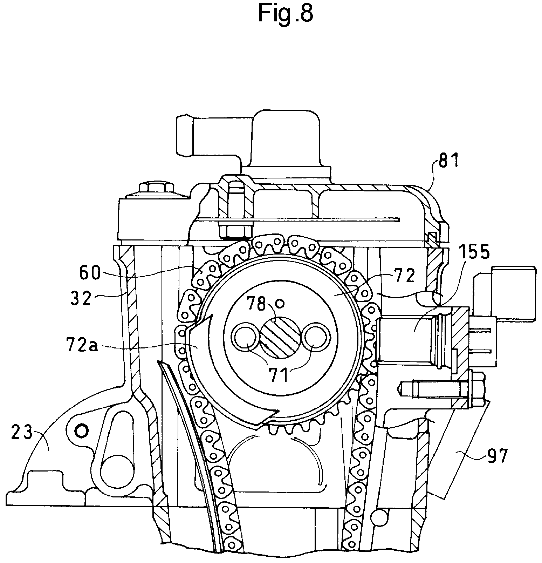

Next, the structure around the head of the engine 200 will be described. Fig. 6 is a side cross-sectional view, Fig. 7 is a front cross-sectional view, and Fig. 8 is a rear cross-sectional view of the periphery of the head of the engine. A piston 63 arranged in a cylinder 62 is connected via a piston pin 64 to the small end side of the connecting rod 14. An ignition plug 65 is screwed to the cylinder head 32, and its electrode part faces a combustion chamber formed between the head of the piston 63 and the cylinder head 32. The cylinder 62 is surrounded by a water jacket 66.

In the cylinder head 32, above the cylinder 62, a camshaft 69 rotatably supported by bearings 67 and 68 is provided. The camshaft 69 is fitted with an attachment 70, and a cam sprocket 72 and a reluctor portion 72a for generating a cam pulse associated with a cam sensor 155 are secured to the attachment 70 by co-fastening with bolts 71. The cam sprocket 72 is hooked with a chain 60. The chain 60 transmits the rotation of the sprocket 59 (see Fig. 5), that is, the rotation of the crankshaft 12, to the camshaft 69.

The upper portion of the camshaft 69 is provided with a rocker arm 73, and the rocker arm 73 swings according to a cam shape of the camshaft 69 with rotation of the camshaft 69. The cam shape of the camshaft 69 is determined so that an intake valve 95 and an exhaust valve 96 are opened and closed according to a predetermined stroke of the four-cycle engine. The intake valve 95 opens and closes the intake pipe 23, and the exhaust valve 96 opens and closes an exhaust pipe 97.

An exhaust cam and an intake cam are integrally formed on the camshaft 69, and a decompression cam 98 engaged only in the reverse rotation direction with respect to the camshaft 69 is provided adjacent to these cams. The decompression cam 98 is rotated to a position projecting from the outer peripheral shape of the exhaust cam following the rotation of the camshaft 69 when the camshaft 69 is reversely rotated.

Therefore, when the camshaft 69 is normally rotated, the exhaust valve 96 can be slightly lifted, and the load in the compression process of the engine can be reduced. Thus, since the torque at the time of starting the crankshaft can be reduced, a small-sized starter can be used as the starter of the four-cycle engine. As a result, the crank circumference can be made compact, and there is an advantage that the bank angle can be made large. Note that, when the cam normally rotates for a while, the outer shape of the decompression cam 98 returns into the outer peripheral shape of the exhaust cam.

In the cylinder head 32, a pump chamber 76 surrounded by a water pump base 74 and a water pump housing 75 is formed. In the pump chamber 76, a pump shaft 78 having an impeller 77 is arranged. The pump shaft 78 is fitted to the end of the camshaft 69 and is rotatably held by a bearing 79. The driving force of the pump shaft 78 is obtained by a pin 80 engaged with the center portion of the cam sprocket 72.

The head cover 81 is provided with an air reed valve 94. The air reed valve 94 sucks air when a negative pressure is generated in the exhaust pipe 97 to improve emission. Note that, although seal members are provided everywhere around the pump chamber 76, description thereof will be omitted.

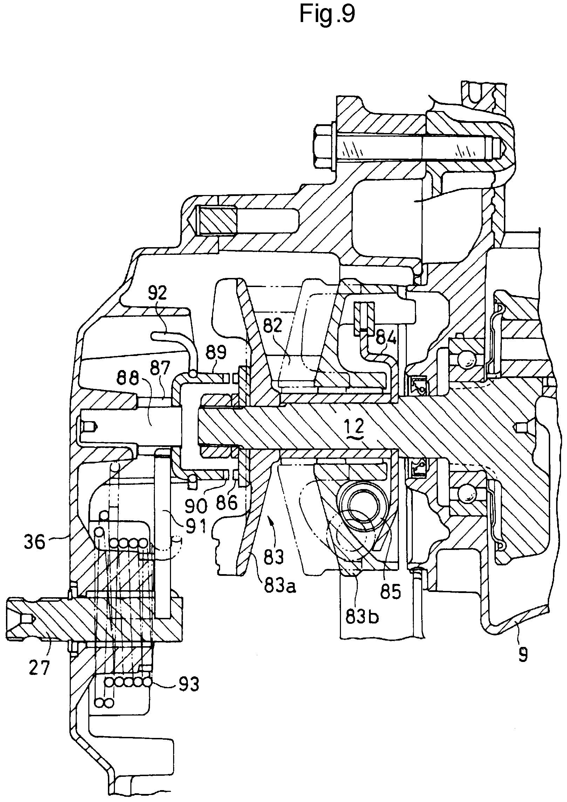

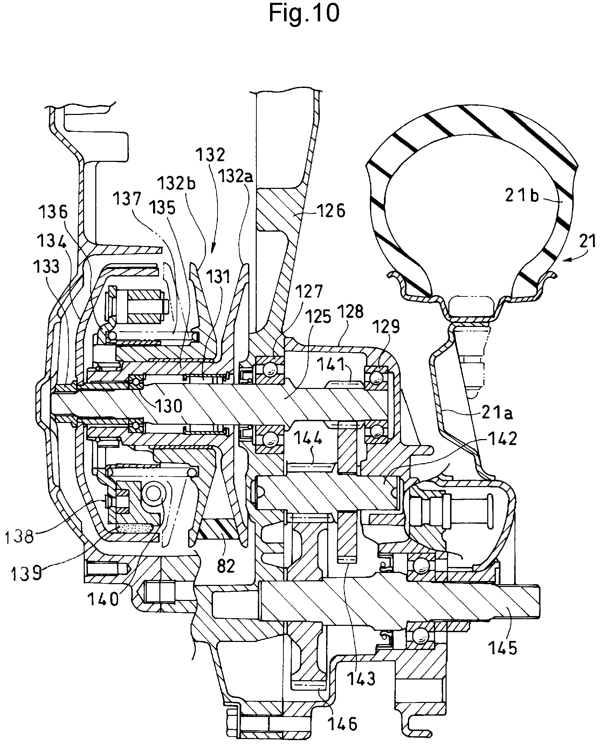

Next, an automatic transmission that shifts the rotation of the engine 200 and transmits it to the rear wheel will be described. Figs. 9 and 10 are cross-sectional views of an automatic transmission portion of an engine, in which Fig. 9 is a drive side and Fig. 10 is a driven side. In Fig. 9, a pulley 83 for winding a V-belt 82 is provided at an end of the crankshaft 12 on the side opposite to the side where the inner rotor 15 of the starting and generating device is provided. The pulley 83 is composed of a fixed pulley piece 83a whose rotational and axial movements are fixed with respect to the crankshaft 12, and a movable pulley piece 83b which is axially slidable with respect to the crankshaft 12. On a back surface of the movable pulley piece 83b, that is, a surface not abutting on the V-belt 82, a holder plate 84 is attached. The movement of the holder plate 84 is regulated in both the rotational direction and the axial direction with respect to the crankshaft 12, and the holder plate 84 rotates integrally. An empty space surrounded by the holder plate 84 and the movable pulley piece 83b forms a pocket for housing a roller 85 as a governor weight.

On the other hand, the clutch mechanism for connecting power to the rear wheel 21 is configured as follows. In Fig. 10, a main shaft 125 of the clutch is supported by a bearing 127 fitted to a case 126 and a bearing 129 fitted to a gear box 128. A fixed pulley piece 132a of the pulley 132 is supported by bearings 130 and 131 to the main shaft 125. A cup-shaped clutch plate 134 is fixed to the end of the main shaft 125 by a nut 133.

In a sleeve 135 of the fixed pulley piece 132a, a movable pulley piece 132b of the pulley 132 is slidably provided in the longitudinal direction of the main shaft 125. The movable pulley piece 132b is engaged with a disk 136 so as to rotate integrally around the main shaft 125. Between the disk 136 and the movable pulley piece 132b, a compression coil spring 137 is provided in which a repulsive force acts in a direction to extend the distance between the disk 136 and the movable pulley piece 132b. Further, the disk 136 is provided with a shoe 139 swingably supported by a pin 138. When the rotational speed of the disk 136 is increased, the shoe 139 is swung in the outer circumferential direction by a centrifugal force, and comes into contact with the inner circumference of the clutch plate 134. Note that, a spring 140 is provided so that when the disk 136 reaches a predetermined rotational speed, the shoe 139 comes into contact with the clutch plate 134.

The main shaft 125 is fixed with a pinion 141, and the pinion 141 is engaged with a gear 143 fixed to an idle shaft 142. Further, a pinion 144 fixed to the idle shaft 142 is engaged with a gear 146 of an output shaft 145. The rear wheel 21 is composed of a rim 21a and a tire 21b fitted around the rim 21a, and the rim 21a is fixed to the output shaft 145.

In the above configuration, when the engine speed is at idling, the roller 85 is located at the position indicated by the solid line in Fig. 9, and the V-belt 82 is wound around the smallest diameter portion of the pulley 83. The movable pulley piece 132b of the pulley 132 is biased to the position of the solid line in Fig. 10 biased by the compression coil spring 137, and the V-belt 82 is wound around the largest diameter portion of the pulley 132. In this state, since the main shaft 125 of the centrifugal clutch is rotated at the idle rotation speed, the centrifugal force applied to the disk 136 is small, and the shoe 139 is pulled inward by the spring 140, so that it does not contact the clutch plate 134. That is, the rotation of the engine is not transmitted to the main shaft 125, and the wheel 21 is not rotated.

Thereafter, as the engine speed increases, the centrifugal force applied to the disk 136 increases, so that the shoe 139 overcomes the spring 140 and extends outward to abut on the clutch plate 134. As a result, the rotation of the engine is transmitted to the main shaft 125, and power is transmitted through the gear train to the wheel 21.

On the other hand, when the engine speed is further increased, the roller 85 is biased in the outer circumferential direction by the centrifugal force. The position indicated by the chain line in Fig. 9 is the position of the roller 85 in this case. When the roller 85 is biased in the outer circumferential direction, the movable pulley 83b is pushed toward the fixed pulley 83a, so that the V-belt 82 moves toward the largest diameter portion of the pulley 83. Then, on the centrifugal clutch side, the movable pulley piece 132b is biased by overcoming the compression coil spring 137, and the V-belt 82 moves toward the smallest diameter portion of the pulley 132. Thus, according to the rotational speed of the engine, the winding diameter of the V-belt 82 with respect to the pulley 83 on the crankshaft 12 side and the pulley 132 on the centrifugal clutch side is changed, and the speed change action is performed.

As described above, it is possible to energize the engine by energizing the starting coil 51 at the time of engine start, but in the present embodiment, a kick starting device for starting the engine 200 by a stepping operation is also used. The kick starting device will be further described with reference to Fig. 9. On the back surface of the fixed pulley 83a, a driven dog gear 86 for kick start is fixed. On the other hand, on the side of the cover 36, a support shaft 88 having a helical gear 87 is rotatably supported. At the end of the support shaft 88, a cap 89 is fixed, and at the end face of the cap 89, a driving dog gear 90 engaged with the driven dog gear 86 is formed.

Further, the cover 36 rotatably supports the kick shaft 27, and a sector helical gear 91 engaged with the helical gear 87 is welded to the kick shaft 27. A spline is formed at an end of the kick shaft 27, that is, at a portion protruding outward from the cover 36, and a spline provided on the kick arm 28 (see Fig. 10) is engaged with the spline. Note that, reference numeral 92 denotes a friction spring, and reference numeral 93 denotes a return spring.

In the above configuration, when the kick pedal 29 is stepped on, the kick shaft 27 and the sector helical gear 91 are rotated by overcoming the return spring 93. The twisting directions of the helical gear 87 and the sector helical gear 91 are set so that, when the sector helical gear 91 is rotated by stepping on of a kick pedal, thrust for energizing a support shaft 88 toward the pulley 83 is generated. Therefore, when the kick pedal 29 is stepped on, the support shaft 88 is biased toward the pulley 83, and the driving dog gear 90 formed on the end face of the cap 89 is engaged with the driven dog gear 86. As a result, the crankshaft 12 is rotated, and the engine 200 can be started. When the engine is started, the stepping on of the kick pedal 29 is weakened, and when the sector helical gear 91 is inverted by the return spring 93, the engagement between the driving dog gear 90 and the driven dog gear 86 is released.

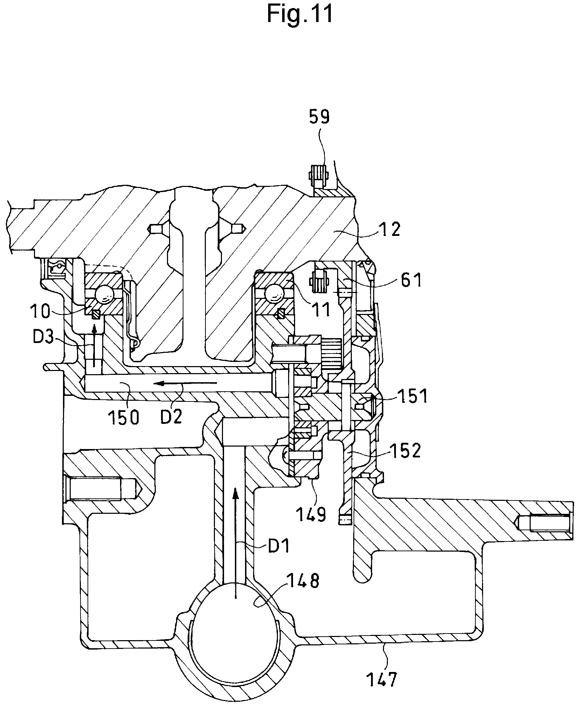

Next, the lubricating oil supply system will be described with reference to Fig. 11. The oil supply part is provided at the lower portion of the crank box 9. In an oil pan 147, a pipeline 148 for introducing oil is formed, and the oil is sucked into a trochoid pump 149 according to an arrow D1. The pressure of the oil sucked into the trochoid pump 149 is increased, and the oil is discharged into a pipeline 150, passes through the pipeline 150 in accordance with arrows D2 and D3, and is discharged into the crank chamber.

Here, a gear 152 is connected to a pump shaft 151 of the trochoid pump 149, and further the gear 152 is engaged with the gear 61 connected to the crankshaft 12. That is, the trochoid pump 149 is driven in accordance with the rotation of the crankshaft 12 to circulate the oil for lubrication.

As described above, in the present embodiment, the sprocket 59 for driving the camshaft 69 and the gear 61 for driving the oil pump are mounted on the crankshaft 12 adjacent to the bearing 11 for supporting the crankshaft 12. Then, at a position close to the sprocket 59 and the gear 61, that is, at a position not far from the bearing 11, the inner rotor 15 including the permanent magnet 19 is arranged.

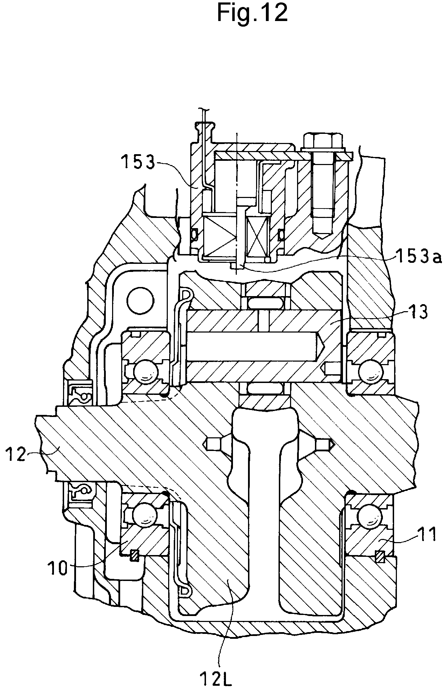

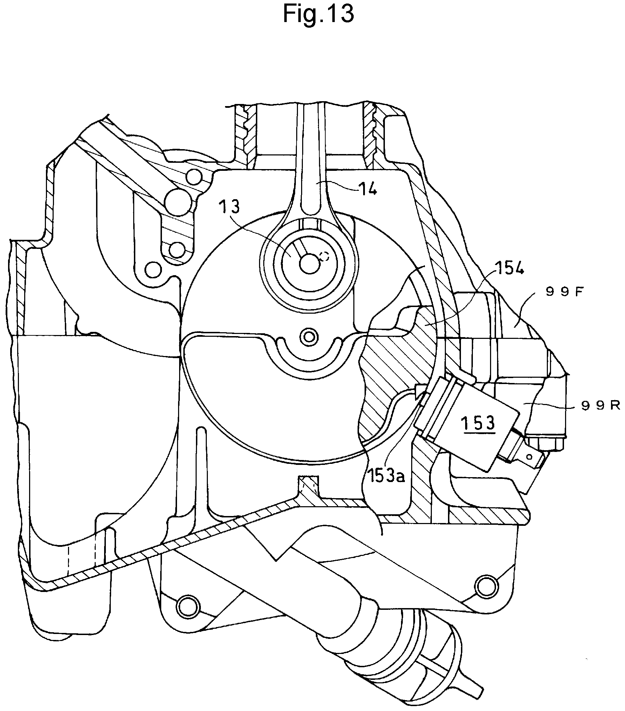

Next, an arrangement of a sensor for outputting a crank pulse will be described. Fig. 12 is a side cross-sectional view around the crankshaft showing an arrangement of a sensor (crank pulser) for generating a crank pulse, and Fig. 13 is a front cross-sectional view thereof. In these figures, the crankcase is composed of a front crankcase 99F and a rear crankcase 99R, and a crank pulser 153 is provided on the rear crankcase 99R side so as to be orthogonal to the crankshaft 12. A detection end 153a of the crank pulser 153 is disposed opposite to the outer peripheral edge of a left crank web 12L. On the outer periphery of the left crank web 12L, a convex portion, that is, a reluctor portion 154 is formed, and the crank pulser 153 is magnetically coupled with the reluctor portion 154 to output a crank angle detection signal.

Next, the engine stop start system will be described. The engine stop start system of this embodiment includes an idling restriction mode and an idling permission mode. In the idling restriction mode, when the vehicle is stopped, the engine automatically stops, and when a start operation is detected in a stopped state, the engine automatically restarts and the vehicle can start (hereinafter also referred to as "stop and start mode").

The idling permission mode has two operation modes, one of which permits idling temporarily after the first engine start for the purpose of warming up at the time of engine start, etc. (hereinafter, "startup mode"). In the other, idling is always permitted at the driver's discretion (setting by switch) (hereinafter, "idle switch mode").

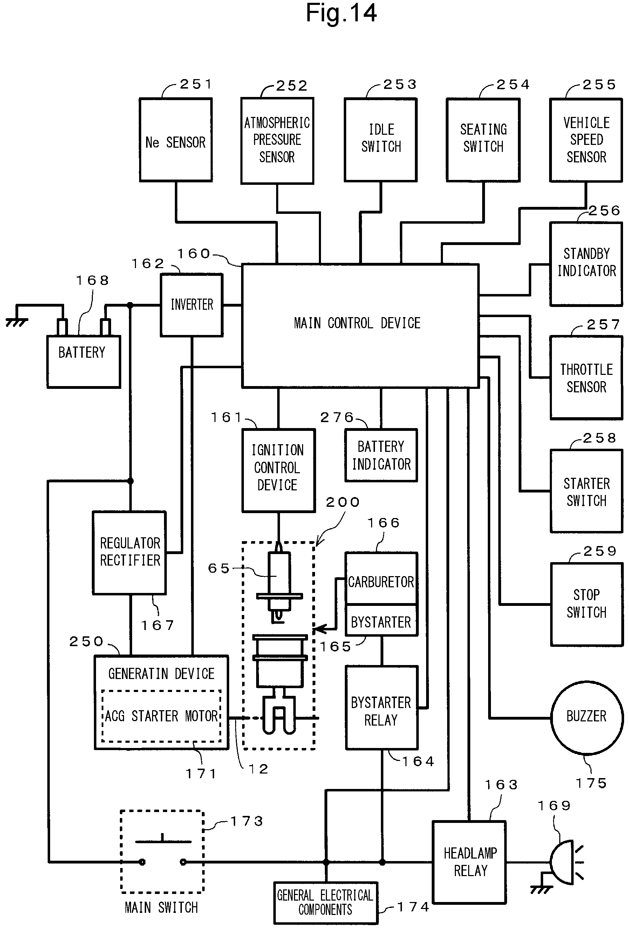

Fig. 14 is a block diagram showing the overall configuration of an engine start stop system. The starting and generating device 250 provided coaxially with the crankshaft 12 is composed of a three-phase AC power generation starter motor (hereinafter referred to as the ACG starter motor) 171 provided with a function as a starter motor for cranking the engine 200 and a function for generating power while the vehicle is running to charge a battery 168. The generated power of the ACG starter motor 171 is charged through a regulator rectifier 167 to the battery 168. The regulator rectifier 167 controls the output voltage of the ACG starter motor 171 to 12 V to 14.5 V. The battery 168 supplies a drive current to the ACG starter motor 171 at the time of engine start, and also supplies a load current via a main switch 173 to various general electrical components 174, a main control device 160, and the like.

The main control device 160 is connected with an Ne sensor 251 for detecting an engine speed Ne, an atmospheric pressure sensor 252 for measuring an atmospheric pressure Pa, an idle switch 253 for manually permitting or restricting the idling of the engine 200, a seating switch 254 for closing a contact point when a driver sits on a seat and outputting an "H" level, a vehicle speed sensor 255 for detecting a vehicle speed, a standby indicator 256 for blinking in a stop and start mode, a throttle sensor 257 for detecting a throttle opening θ, a starter switch 258 for driving the ACG starter motor 171 to start the engine 200, a stop switch 259 for outputting an "H" level in response to a brake operation, and a battery indicator 276 which lights when the voltage of the battery 168 falls below an anticipated value (for example, 10 V) to warn the driver of insufficient charge.

The main control device 160 is further connected with an ignition control device (Including an ignition coil) 161 for igniting the ignition plug 65 in synchronization with the rotation of the crankshaft 12, an inverter 162 for normally rotating or reversely rotating the ACG starter motor 171, a headlamp relay 163 for supplying electric power to a headlamp 169, a bystarter relay 164 for supplying electric power to a bystarter 165 mounted on a carburetor 166, and a buzzer 175 for generating an alarm sound under predetermined conditions to urge the driver to pay attention.

The power supply control to the headlamp 169 is not limited to the ON/OFF switching control by the headlamp relay 163. For example, a switching element such as an FET may be employed in place of the headlamp relay 163, and instead of turning off the power supply, a so-called chopping control may be employed in which the switching element is interrupted at a predetermined cycle and duty ratio to substantially lower the voltage applied to the headlamp 169.

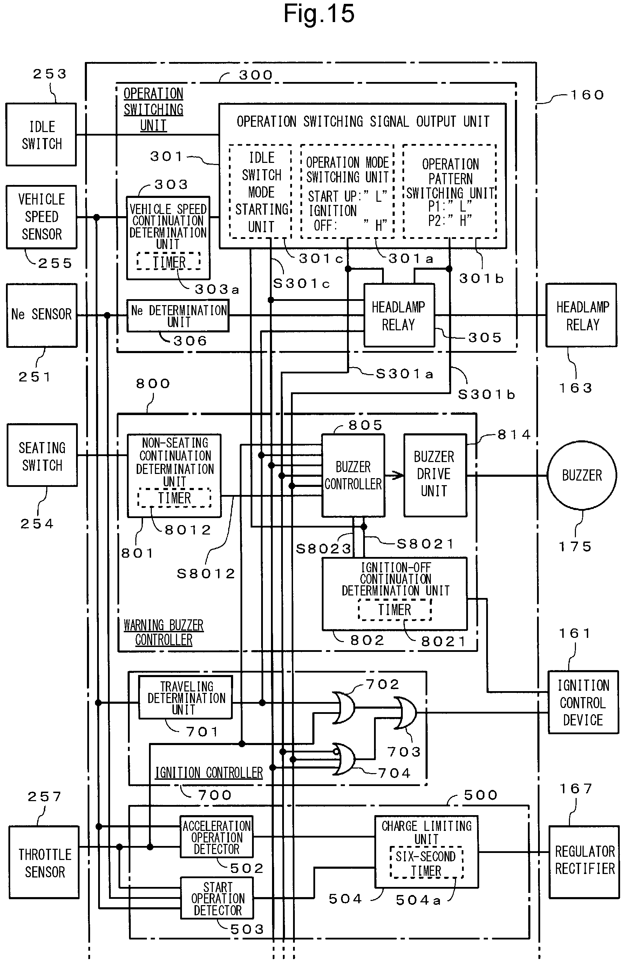

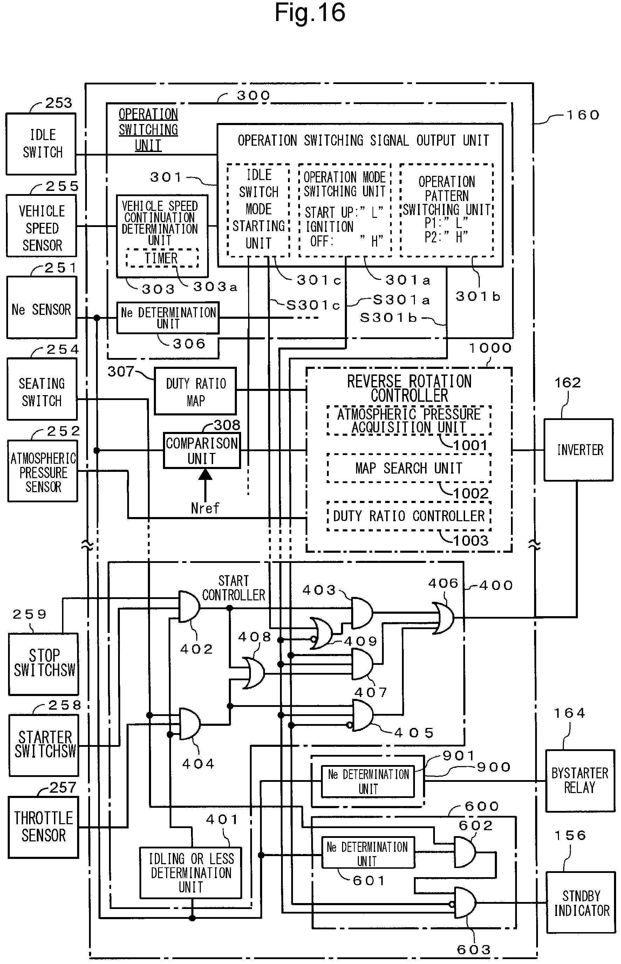

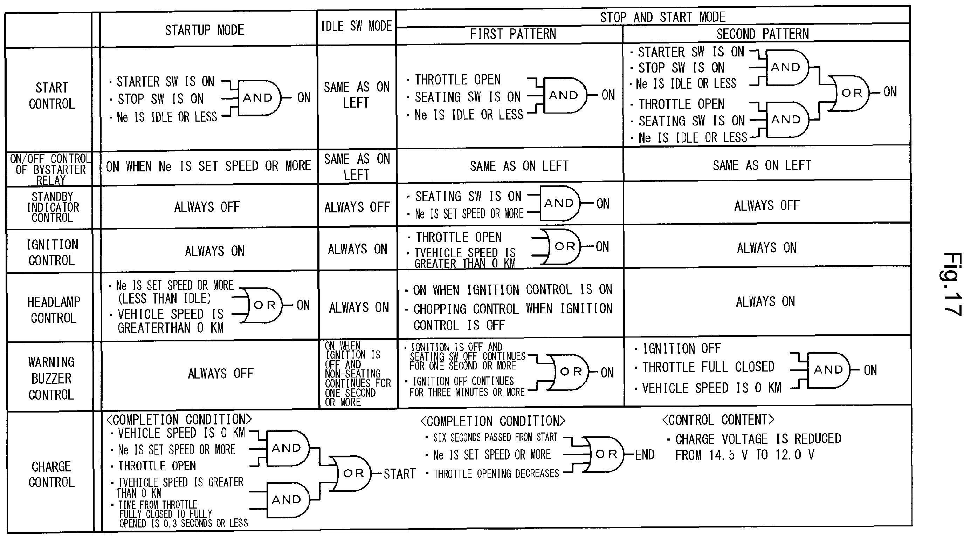

Figs. 15 and 16 are functional block diagrams showing the configuration of the main control device 160 (part one, part two), and the same reference numerals as in Fig. 14 denote the same or equivalent parts. Fig. 17 shows a list of control contents of a start controller 400, the control contents of a bystarter controller 900, the control contents of a standby indicator controller 600, the control contents of an ignition controller 700, the control contents of an operation switching unit 300, the control contents of a warning buzzer controller 800, and the control contents of a charge controller 500, which will be described later.

When the state of the idle switch 253 and the state of the vehicle or the like are under predetermined conditions, the operation switching unit 300 of Fig. 15 switches a mode to one of the "startup mode", "stop and start mode", or "idle switch mode", and further switches the "stop and start mode" to one of a first operation pattern (hereinafter referred to as "first pattern") for prohibiting all idling and a second operation pattern (hereinafter referred to as "second pattern") for exceptionally permitting idling under predetermined conditions. The second pattern is suitable as a battery exhaustion prevention mode for preventing the battery exhaustion when the engine is stopped for a long time in the state of lighting the headlamp 169.

An operation switching signal output unit 301 of the operation switching unit 300 receives a state signal of the idle switch 253. The state signal of the idle switch 253 indicates an OFF state (idling restriction) at an "L" level, and an ON state (idling permission) at an "H" level. A vehicle speed continuation determination unit 303 includes a timer 303 a, and when the vehicle speed sensor 255 detects that the vehicle speed is equal to or higher than an anticipated speed for an anticipated time or longer, it outputs a signal of "H" level.

The operation switching signal output unit 301 outputs signals S301a, S301b, and S301c for switching the operation mode and the operation pattern of the main control device 160 in response to the output signals of the idle switch 253 and the vehicle speed continuation determination unit 303, and the ignition off signal S8023 which becomes "H" level when the ignition off state of the engine continues for a predetermined time (in the present embodiment, three minutes) or longer.

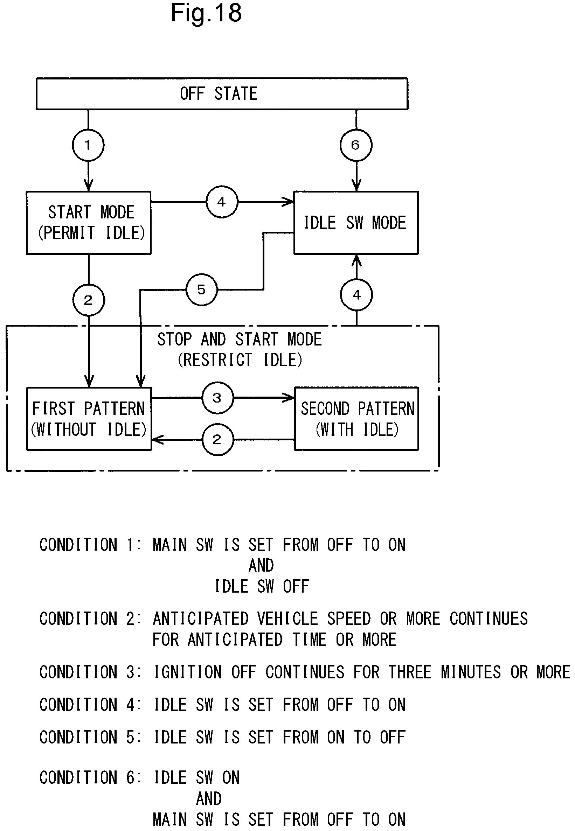

Fig. 18 is a diagram schematically showing conditions for switching the operation mode and the operation pattern by the operation switching signal output unit 301. In the operation switching signal output unit 301, when the main switch 173 is turned on to reset the main control device 160 or when the idle switch 253 is turned off (conditions are met), an operation mode switching unit 301a starts the "startup mode". At this time, the operation mode switching unit 301a outputs an operation mode signal S301a of "L" level.

Further, in this "startup mode", when the vehicle speed equal to or higher than the anticipated speed is detected for the anticipated time or longer (conditions are met), the operation mode switching unit 301a switches the operation mode from "startup mode" to "stop and start mode". At this time, the operation mode signal S301a of the operation mode switching unit 301a shifts from the "L" level to the "H" level. Immediately after shifting from the "startup mode", the operation pattern switching unit 301b starts the "first pattern" to prohibit idling. At this time, an operation pattern signal S301b of the operation pattern switching unit 301b is at the "L" level.

In the "first pattern", when an ignition-off continuation determination unit 802 (Fig. 15) described later in more detail determines that the ignition-off continues for three minutes or more (conditions are met), the operation pattern switching unit 301b switches the operation pattern in the "stop and start mode" from the "first pattern" to the "second pattern". At this time, the operation pattern signal S301b output from the operation pattern switching unit 301b shifts from the "L" level to the "H" level.

Further, when the conditions are met in the "second pattern", the operation pattern switching unit 301b switches the operation pattern from the "second pattern" to the "first pattern". At this time, the operation pattern signal S301b of the operation pattern switching unit 301b shifts from the "H" level to the "L" level.

According to the investigation by the present inventors, the waiting time for a traffic light or the waiting time for a right turn at an intersection is about 30 seconds to two minutes, and there is a high possibility that a stop exceeding this time is a stop other than the waiting time for a traffic light or the waiting time for a right turn, for example, a one-way traffic restriction or a traffic jam caused by road construction. Therefore, in the present embodiment, when the vehicle is forced to stop for a long period of time (in the present embodiment, three minutes or more), that is, to stop the engine while the headlamp is turned on when the vehicle is running in the "stop and start mode", the operation pattern is switched from the "first pattern" to the "second pattern" to permit idling. Therefore, when the driver turns on the starter switch 258, the engine can be restarted and the vehicle can be stopped in an idling state, so that the battery exhaustion caused by continuously lighting the headlamp 169 for a long time can be prevented.

On the other hand, when the main switch 173 is switched from off to on, and the idle switch 253 is turned on (conditions are met), the operation mode signal S301c output from the idle switch mode starting unit 301c shifts from the "L" level to the "H" level, and the "idle switch mode" is started. Note that, in the "stop and start mode", regardless of the "first pattern" and "second pattern", when the idle switch 253 is turned on and the conditions are met, the "idle switch mode" is started.

In addition, in the "idle switch mode", when the idle switch 253 is turned off (conditions are met), the operation mode signal S301a output from the operation mode switching unit 301a becomes "L" level, and the "startup mode" is started.

Returning to Fig. 15, the output signal of the Ne sensor 251 is input to an Ne determination unit 306, and when the engine speed exceeds an anticipated speed, a signal of "H" level is output to the headlamp controller 305. Once the engine speed exceeds the anticipated speed, the Ne determination unit 306 maintains the output at the "H" level until the main switch 173 is shut off. The headlamp controller 305 outputs a control signal of "H" level or "L" level to the control terminal of the headlamp relay 163 based on the operation mode (pattern) signals S301a, S301b, and S301C, the output signal of the Ne determination unit 306, and the output signal of a traveling determination unit 701. When a signal of "H" level is input to the headlamp relay 163, the headlamp 169 is lighted.

When a switching element such as an FET is adopted instead of the headlamp relay 163, the headlamp controller 305 outputs pulse signals having a predetermined cycle and duty ratio to chopping control power supply to the headlamp 169 instead of outputting a control signal of "L" level.

As shown in Fig. 17, the headlamp controller 305 always outputs an ON signal except for the "startup mode". That is, in the "startup mode", an ON signal is output when the Ne determination unit 306 detects an engine speed equal to or higher than a predetermined set speed (in the present embodiment, 1500 rpm), or when the traveling determination unit 701 determines that the vehicle speed is greater than 0 km.

Note that, in the case where a switching element such as an FET is adopted instead of the headlamp relay 163, in the "first pattern" of the "stop and start mode", the opening/closing of the switching element is chopping controlled in accordance with the ignition control to be described later in detail, so that the discharge of the battery can be minimized.

That is, when the ignition control is interrupted (Off) in response to the vehicle stop and the engine automatically stops, the headlamp controller 305 performs chopping control of the switching element with pulse signals of a predetermined period and duty ratio so that the voltage applied to the headlamp 169 substantially decreases from the voltage at the time of constant ON (for example, 13.1 V) to the predetermined voltage at the time of dimming (for example, 8.6 V), thereby dimming the headlamp 169. Thereafter, when the ignition control is restarted in response to the start operation and the engine is restarted, the headlamp controller 305 outputs a DC "H" level signal to the switching element.

In this way, when the engine is automatically stopped, discharge of the battery can be suppressed by dimming the light without turning off the headlamp 169. Therefore, the amount of charge from the generator to the battery can be reduced at the time of starting later, and as a result, the electric load of the generator is reduced, so that the acceleration performance at the time of starting is improved.

The ignition controller 700 permits or prohibits the ignition operation by an ignition control device 161 under predetermined conditions for the each operation mode and operation pattern. The traveling determination unit 701 determines whether or not the vehicle is in a traveling state based on a detection signal input from the vehicle speed sensor 255, and outputs a signal of "H" level when the vehicle is in the traveling state.

An OR circuit 702 outputs a logical sum of the output signal of the traveling determination unit 701 and the state signal of the throttle sensor 257. An OR circuit 704 outputs a logical sum of an inverted signal of the operation mode signal S301a, the operation pattern signal S301b, and the operation mode signal S301c. An OR circuit 703 outputs a logical sum of the output signals of the OR circuits 702 and 704 to the ignition control device 161. The ignition control device 161 executes the ignition operation at every predetermined timing when the input signal is at the "H" level, and interrupts the ignition operation when the input signal is at the "L" level.

As shown in Fig. 17, in the ignition controller 700, when the mode is any of the "startup mode", "second pattern of the stop and start mode", and "idle switch mode", the output signal of the OR circuit 704 becomes the "H" level, so that a signal of "H" level is always output from the OR circuit 703. That is, in the case of the "startup mode", "second pattern of stop and start mode", or "idle switch mode", the ignition control device 161 is always operated.

On the other hand, in the "first pattern of stop and start mode", since the output signal of the OR circuit 704 is at the "L" level, the ignition operation is executed on the condition that it is determined that the vehicle is traveling by the traveling determination unit 701 or the throttle is opened and the output of the OR circuit 702 is at the "H" level. On the contrary, when the vehicle is in the stopped state and the throttle is closed, the ignition operation is interrupted.

The warning buzzer controller 800 generates, for example, a buzzer sound as a warning for urging various kinds of attention to the driver according to the traveling state of the vehicle and the seating state of the driver in each operation mode and operation pattern. A non-seating continuation determination unit 801 receives a state signal of the seating switch 254. The non-seating continuation determination unit 801 includes a timer 8012 for counting the non-seating time of the driver, and when the timer 8012 times out, outputs a non-seating continuation signal S8012 of "H" level. Note that, the timer 8012 of this embodiment is preset to time out in one second.

The ignition-off continuation determination unit 802 includes a timer 8021 for counting the ignition-off time of the engine, and outputs an ignition-off signal S8023 of "H" level and starts the timer 8021 immediately when the ignition-off state is detected. When the timer 8021 times out, an ignition-off continuation signal S8021 of "H" level is output. In this embodiment, the timer 8021 is set to time out in three minutes.

The buzzer controller 805 determines on/off of the buzzer 175 on the basis of the respective operation mode (pattern) signals S301a, S301b, S301C, the non-seating continuation signal S8012, the ignition-off continuation signal S8021, the ignition off signal S8023, the output signal of the traveling determination unit 701, and the output signal of the throttle sensor 257, and outputs a signal of "H" level to a buzzer drive unit 814 when the buzzer 175 is turned on.

As shown in Fig. 17, when the operation mode is the "startup mode", the buzzer controller 805 always turns off the buzzer 175. In the "first pattern of stop and start mode", if the non-seating in the ignition-off state continues for a time out period of the timer 8012 (one second in this embodiment) or longer, or if the ignition-off state continues for a time out period of the timer 8021 (three minutes in this embodiment) or longer, the buzzer 175 is turned on. In the "second pattern of stop and start mode", when no ignition is made (ignition off), the throttle opening is "0" according to an input signal from the throttle sensor 257, and the vehicle speed is determined to be 0 km by the traveling determination unit 701 according to an input signal from the vehicle speed sensor 255, the buzzer 175 is turned on. In the "idle switch mode", when ignition is turned off and the non-seating continues for one second or more, the buzzer 175 is turned on. When the output signal of the buzzer controller 805 becomes an "H" level, the buzzer drive unit 814 outputs a buzzer drive signal repeating ON for 0.2 seconds and OFF for 1.5 seconds to the buzzer 175.

As described above, in the buzzer control according to the present embodiment, when the vehicle is forced to stop (engine stop) for a long period of time (in the present embodiment, three minutes or more) during traveling in the "stop and start mode" while the headlamp is turned on due to, for example, one side traffic regulation by road construction or the like, the operation pattern of "stop and start mode" shifts from the "first pattern" to the "second pattern", and at the same time, the buzzer 175 notifies the driver that idling is permitted. Therefore, only by turning on the starter switch 258 in response to the buzzer, the driver can prevent the battery exhaustion due to continuous lighting of the headlamp 169 for a long time.

When the vehicle speed is greater than 0 km and the time for opening the throttle from the fully closed state to the fully opened state is, for example, 0.3 seconds or less, based on the input signal from the throttle sensor 257 and the input signal from the vehicle speed sensor 255, an acceleration operation detector 502 of the charge controller 500 recognizes that an acceleration operation has been performed and generates a one-shot acceleration operation detection pulse.

When the vehicle speed is 0 km and the engine speed is a predetermined set speed (in the present embodiment, 2500 rpm) or less and the throttle is "open", a start operation detector 503 recognizes that a start operation has been performed and generates a one-shot start operation detection pulse. Upon detection of the acceleration detection pulse signal, a charge limiting unit 504 starts a six-second timer 504a, and controls the regulator rectifier 167 until the six-second timer 504a times out to lower the charge voltage of the battery 168 from the normal 14.5Vto 12.0V.

According to the charge control, when the driver suddenly opens the throttle and accelerates, or when the vehicle starts from the stopped state, the charge voltage is lowered, and the electric load of the starting and generating device 250 is temporarily reduced. Thus, the mechanical load of 200 of the engine caused by the starting and generating device 250 also reduces resulting in improved acceleration performance. Further, when the engine is automatically stopped, if the headlamp 169 is dimmed by chopping control of a switching element such as an FET, and the discharge of the battery is minimized, the load of the starting and generating device 250 is further reduced, so that the acceleration performance can be further improved.

Note that, as shown in Fig. 17, when the six-second timer 504a times out, the engine speed exceeds the set speed (in the present embodiment, 7000 rpm), or the throttle opening decreases, the charge limiting unit 504 stops the charge control and returns the charge voltage to the normal 14.5 V.

In Fig. 16, in the bystarter controller 900, an output signal from the Ne sensor 251 is input to an Ne determination unit 901. When the engine speed is equal to or higher than an anticipated value, the Ne determination unit 901 outputs a signal of "H" level and closes the bystarter relay 164. According to this configuration, the fuel can be enriched if the engine speed is equal to or higher than the anticipated value in any of the operation modes.

In the indicator controller 600, an output signal from the Ne sensor 251 is input to an Ne determination unit 601. The Ne determination unit 601 outputs a signal of "H" level when the engine speed is equal to or less than the anticipated value. An AND circuit 602 outputs a logical product of the state signal of the seating switch 254 and the output signal of the Ne determination unit 601. An AND circuit 603 outputs a logical product of the output signal of the AND circuit 602, the operation mode signal S301a, and an inverted signal of the operation pattern signal S301b to the standby indicator 256. The standby indicator 256 turns off when the input signal is at the "L" level and blinks when it is at the "H" level.

That is, since the standby indicator 256 blinks when the vehicle is stopped during the "stop and start mode", the driver can recognize that if the standby indicator 256 is blinking, the vehicle can immediately start as long as the accelerator is opened even when the engine is stopped.

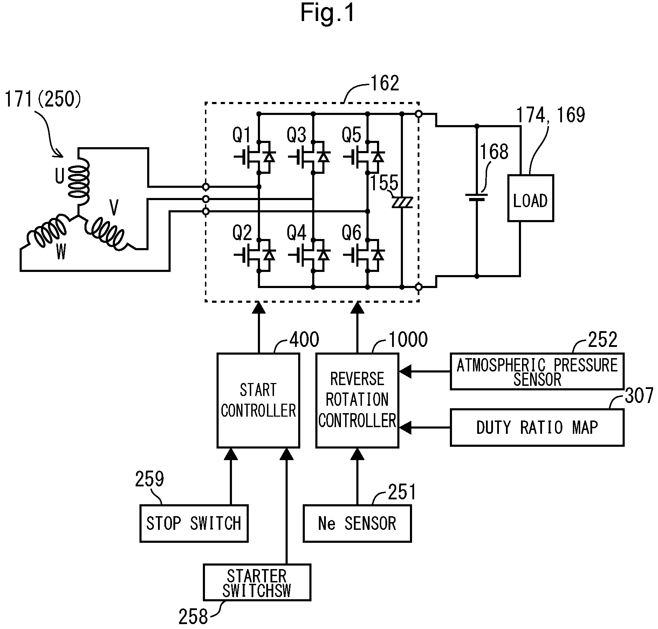

As shown in the outline of Fig. 1, the start controller 400 and a reverse rotation controller 1000 control the inverter 162 so that the ACG starter motor 171 is driven to rotate normally at the time of engine start and is driven to rotate reversely after the engine is stopped.

In Fig. 1, the inverter 162 is an FET bridge structure including six power FETs (Q1, Q2, Q3, Q4, Q5, Q6) connected to stator coils U, V, and W of the ACG starter motor 171, and constituted by parallel connecting three power FET pairs each of which is connected in series by two FETs, and performs bidirectional orthogonal power conversion. The inverter 162 converts the output voltage of the battery 168 into an AC voltage and supplies the AC voltage to the ACG starter motor 171 at the time of engine start, and converts the AC power generated by the ACG starter motor 171 into a DC voltage and supplies the DC voltage to the battery 168 and an electrical equipment load (174, 169) via the DC-DC converter (not shown) and a smoothing capacitor 155 after the engine is started.

The start controller 400 issues a start command in response to the output signals of the stop switch 259 and the starter switch 258. The reverse rotation controller 1000 searches a duty ratio for reverse rotation driving corresponding to the present atmospheric pressure by referring to a duty ratio map 307 based on the measurement result of the atmospheric pressure sensor 252, and issues a reverse rotation command at the duty ratio based on the output of the Ne sensor 251.

Returning to Fig. 16, the start controller 400 controls the inverter 162 in accordance with the respective operation modes and operation patterns, and drives the ACG starter motor 171 to normally rotate and starts the engine under predetermined conditions. A detection signal of the Ne sensor 251 is supplied to an idling or less determination unit 401. When the engine speed is a predetermined idling speed (for example, 800 rpm) or lower, the idling or less determination unit 401 outputs a signal of "H" level.

An AND circuit 402 outputs a logical product of the output signal of the idling or less determination unit 401, the status signal of the stop switch 259, and the status signal of the starter switch 258. An AND circuit 404 outputs a logical product of the output signal of the idling or less determination unit 401, the detection signal of the throttle sensor 257, and the status signal of the seating switch 254. An OR circuit 408 outputs a logical OR of output signals of the AND circuits 402 and 404.

An OR circuit 409 outputs a logical sum of the operation mode signal S301c and an inverted signal of the operation mode signal S301a. An AND circuit 403 outputs a logical product of the output signal of the AND circuit 402 and the output signal of the OR circuit 409. An AND circuit 405 outputs a logical product of the output signal of the AND circuit 404, the operation mode signal S301a, and an inverted signal of the operation pattern signal S301b.

An AND circuit 407 outputs a logical product of the operation mode signal S301a, the operation pattern signal S301b, and the output signal of the OR circuit 408. An OR circuit 406 outputs a logical sum of the AND circuits 403, 405, and 407 as a start command to the inverter 162. The inverter 162 performs inverter control for normally rotating the ACG starter motor 171 in response to the start command.

According to this engine start control, since the output signal of the OR circuit 409 is at the "H" level during the "startup mode" and "idle switch mode", the AND circuit 403 is enabled. Therefore, when the engine speed is idling or less and the stop switch 259 is in the ON state (during the brake operation), when the starter switch 258 is turned on by the driver and the output of the AND circuit 402 becomes the "H" level, the ACG starter motor 171 is driven to rotate normally by the inverter 162 to start the engine.

Further, in the "first pattern of stop and start mode", the AND circuit 405 is enabled. Therefore, when the engine speed is idling or less and the throttle is opened with the seating switch 254 in the ON state (while the driver is seated in the seat), the output of the AND circuit 404 becomes the "H" level. As a result, the ACG starter motor 171 is driven to rotate normally by the inverter 162 to start the engine.

Further, in the "second pattern of stop and start mode", the AND circuit 407 is enabled. Therefore, when any of the AND circuits 402 and 404 becomes the "H" level, the ACG starter motor 171 is driven to rotate normally by the inverter 162 to start the engine.

After the engine is stopped, the reverse rotation controller 1000 drives the ACG starter motor 171 to rotate reversely at a speed or torque corresponding to the atmospheric pressure, thereby reversely rotating the engine to a crank angle position suitable for restarting the engine without referring to the crank angle.

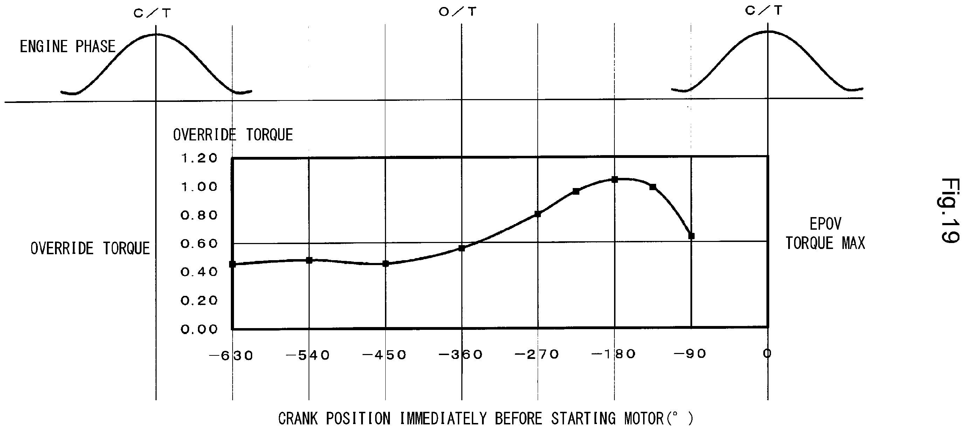

Fig. 19 shows a relationship between the crank position at the time of engine start and the override torque, that is, the torque required to cross the top dead center, and the override torque is small when the crank angle is in the range from 450 degrees to 630 degrees in front of the compression top dead center C/T. However, from 90 degrees to 450 degrees in front of the compression top dead center C/T, the override torque is large, and particularly at 180 degrees in front of the compression top dead center C/T, the override torque is maximum. That is, the override torque is large approximately in front of the compression top dead center C/T, and small approximately in front of the exhaust top dead center O/T.

Therefore, in the present embodiment, the ACG starter motor 171 is driven to rotate reversely after the engine is stopped, and the startability of the engine is improved by ensuring a sufficient entry period until the angle position where the override torque becomes maximum at the time of next engine start.

On the other hand, also in reverse rotation, the override torque becomes maximum in the vicinity of the compression top dead center C/T as in normal rotation. Therefore, if the inverter 162 is controlled so that the torque or speed of the ACG starter motor 171 can be suppressed to be less than or equal to the override torque at the time of reverse rotation, the crank position can be returned to the angle position where the entry distance is sufficient simply by continuing the reverse rotation drive to the position where the ACG starter motor 171 cannot be reversely rotated at the time of reverse rotation without detecting the crank angle.

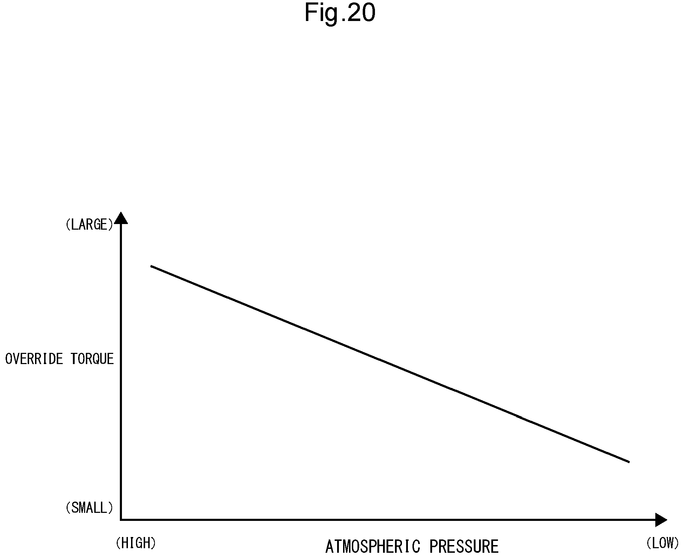

However, as shown in Fig. 20, the override torque at the time of reverse rotation depends on the atmospheric pressure. Therefore, when the speed and torque at the time of reverse rotation are set in accordance with the atmospheric pressure in a flat land, the reverse rotation torque exceeds the override torque at a high altitude where the atmospheric pressure is low, and the engine cannot be stopped at a desired position. Therefore, in the present embodiment, the atmospheric pressure is measured after the engine is stopped, and the ACG starter motor 171 is reversely rotated at a speed and torque corresponding to the measurement result of the atmospheric pressure.

In the duty ratio map 307, the relationship between the atmospheric pressure at the time of reverse rotation and the drive duty ratio of the inverter 162, which is calculated based on the relationship between the override torque at the time of reverse rotation and the atmospheric pressure, is previously registered in a map format. The drive duty ratio is set to a sufficiently large value within a range in which the reverse rotation torque does not exceed the override torque corresponding to the atmospheric pressure.

A comparison unit 308 compares a detection signal (engine speed) of the Ne sensor 251 with a reference rotational speed Nref. The reference rotational speed Nref is set to an appropriate value larger than the engine cranking speed and smaller than the idle speed. When the engine speed Ne is less than the reference rotational speed Nref, the comparison unit 308 outputs a reverse rotation command.

In the reverse rotation controller 1000, an atmospheric pressure acquisition unit 1001 acquires a measured value of atmospheric pressure from the atmospheric pressure sensor 252. A map search unit 1002 searches a duty ratio corresponding to the acquired measured value of atmospheric pressure on the duty ratio map 307. A duty ratio controller 1003 drives each switch of the inverter 162 at the determined duty ratio, thereby driving the ACG starter motor 171 to rotate reversely.

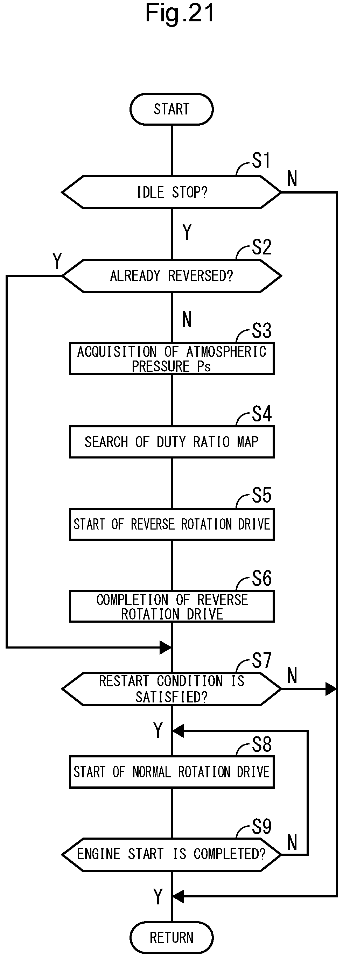

Fig. 21 is a flowchart showing the procedure of drive control of the ACG starter motor 171 by the start controller 400 and the reverse rotation controller 1000.

In step S1, when the vehicle stops and the idle stop is detected, in step S2, it is determined whether or not the crank has been reversely rotated. Since it is determined that the crank has not been reversely rotated immediately after the idle stop, the process proceeds to step S3.

In step S3, a measured value Pa of the atmospheric pressure sensor 252 is taken in. In step S4, the duty ratio map 307 is searched based on the measured value Pa, and the duty ratio corresponding to the measured value is extracted. In step S5, the inverter 162 is controlled at the duty ratio, and the ACG starter motor 171 is driven to rotate reversely at a proper rotational speed or a proper torque corresponding to the atmospheric pressure. As a result, in the present embodiment, when the crankshaft is returned to the angle corresponding to the vicinity of the compression top dead center, it stops due to insufficient torque. In step S6, the reverse rotation drive is completed.

In step S7, it is determined whether or not the restart condition of the engine 200 is satisfied. If the restart condition is not satisfied, the process returns to step S1 and the above processes are repeated. When the restart condition is satisfied, the process proceeds to step S8, in which the start controller 400 controls the inverter 162, and the ACG starter motor 171 is driven to rotate normally to start the engine.

### Reference Signs List

- 2: vehicle body front part
- 3: vehicle body rear part
- 8: seat
- 8a: frame
- 9: crank box
- 12: crankshaft
- 16: luggage box
- 69: camshaft
- 72a: reluctor
- 171: ACG starter motor
- 250: starting and generating device
- 254: seating switch
- 258: starter switch
- 259: stop switch

## Claims

1. An engine restart device, comprising:
a starter (250) connected to a crankshaft (12) of an engine (200);
a vehicle speed detector (255) that detects a vehicle speed;
an ignition unit (65) that ignites the engine (200);
a controller (160) that controls the starter (250) and ignition unit (65) based on the detected vehicle speed; and
an atmospheric pressure measuring unit (252) that measures an atmospheric pressure (Pa),
wherein
the starter (250) is a three-phase brushless starter/generator (171), and
the controller (160) performs idle stop when stop of a vehicle is detected based on the vehicle speed, and normally rotates the crankshaft (12) after reversely rotating the crankshaft (12) when restarting the engine (200), **characterized in that**
the atmospheric pressure measuring unit (252) measures the atmospheric pressure (Pa) after idle stop,
the controller (160) is configured to control a speed at which the crankshaft (12) reversely rotates by controlling an inverter (162) at a drive duty ratio of the starter (250) extracted (307) the measured from a duty ratio map based on atmospheric pressure (Pa).

2. The engine restart device according to claim 1, wherein the duty ratio map (307) represents a relationship between the atmospheric pressure (Pa) and the drive duty ratio.

3. The engine restart device according to claim 2, wherein the controller (160) reduces a speed at which the crankshaft (12) reversely rotates as the atmospheric pressure (Pa) decreases.

4. The engine restart device according to claim 1, wherein
the crankshaft (12) reversely rotates until it stops due to insufficient torque when the crankshaft (12) is returned to the angle corresponding to the vicinity of the compression top dead center (C/T).

## Patentansprüche

1. Eine Motorneustart-Vorrichtung, aufweisend:
einen Anlasser (250), der mit einer Kurbelwelle (12) eines Motors (200) verbunden ist;
einen Fahrzeuggeschwindigkeitsdetektor (255), der eine Fahrzeuggeschwindigkeit erfasst;
eine Zündeinheit (65), die den Motor (200) zündet;
eine Steuerung (160), die auf der Grundlage der erfassten Fahrzeuggeschwindigkeit den Anlasser (250) und die Zündeinheit (65) steuert; und
eine Atmosphärendruck-Messeinheit (252), die einen Atmosphärendruck (Pa) misst, wobei
der Anlasser (250) ein dreiphasiger bürstenloser Anlasser/Generator (171) ist, und
die Steuerung (160) einen Leerlaufstopp durchführt, wenn auf der Grundlage der Fahrzeuggeschwindigkeit ein Anhalten eines Fahrzeugs erkannt wird, und nach einer Rückwärtsdrehung der Kurbelwelle (12) beim Neustart des Motors (200) die Kurbelwelle (12) normal dreht, **dadurch gekennzeichnet, dass**
die Atmosphärendruck-Messeinheit (252) nach dem Leerlaufstopp den Atmosphärendruck (Pa) misst,
die Steuerung (160) so konfiguriert ist, dass sie eine Drehzahl steuert, mit der sich die Kurbelwelle (12) rückwärts dreht, indem sie einen Wechselrichter (162) mit einem Antriebs-Tastverhältnis des Anlassers (250) steuert, welches auf der Grundlage des gemessenen Atmosphärendrucks (Pa) aus einem Tastverhältnis-Kennfeld (307) entnommen wird.

2. Die Motorneustart-Vorrichtung nach Anspruch 1, wobei das Tastverhältnis-Kennfeld (307) eine Beziehung zwischen dem Atmosphärendruck (Pa) und dem Antriebs-Tastverhältnis darstellt.

3. Die Motorneustart-Vorrichtung nach Anspruch 2, wobei, wenn der Atmosphärendruck (Pa) abnimmt, die Steuerung (160) eine Drehzahl, mit der sich die Kurbelwelle (12) rückwärts dreht, reduziert.

4. Die Motorneustart-Vorrichtung nach Anspruch 1, wobei
die Kurbelwelle (12) sich rückwärts dreht, bis sie aufgrund eines unzureichenden Drehmoments stoppt, wenn die Kurbelwelle (12) in den Winkel zurückgeführt wird, welcher dem Bereich des oberen Totpunkts der Kompression (C/T) entspricht.

## Revendications

1. Dispositif de redémarrage de moteur, comprenant :
un démarreur (250) relié à un vilebrequin (12) d'un moteur (200) ;
un détecteur de vitesse de véhicule (255) qui détecte une vitesse de véhicule ;
une unité d'allumage (65) qui allume le moteur (200) ;
un dispositif de commande (160) qui commande le démarreur (250) et l'unité d'allumage (65) sur la base de la vitesse de véhicule détectée ; et
une unité de mesure de pression atmosphérique (252) qui mesure une pression atmosphérique (Pa),
dans lequel
le démarreur (250) est un démarreur/générateur sans balai triphasé (171), et
le dispositif de commande (160) réalise un arrêt au ralenti lorsqu'un arrêt d'un véhicule est détecté sur la base de la vitesse du véhicule, et fait normalement tourner le vilebrequin (12) après une rotation inverse du vilebrequin (12) lors du redémarrage du moteur (200), **caractérisé en ce que**
l'unité de mesure de pression atmosphérique (252) mesure la pression atmosphérique (Pa) après l'arrêt au ralenti,
le dispositif de commande (160) est configuré pour commander une vitesse à laquelle le vilebrequin (12) tourne en sens inverse par la commande d'un inverseur (162) selon un rapport cyclique d'entraînement du démarreur (250) extrait d'une carte de rapport cyclique (307) sur la base de la pression atmosphérique (Pa) mesurée.

2. Dispositif de redémarrage de moteur selon la revendication 1, dans lequel la carte de rapport cyclique (307) représente une relation entre la pression atmosphérique (Pa) et le rapport cyclique d'entraînement.

3. Dispositif de redémarrage de moteur selon la revendication 2, dans lequel le dispositif de commande (160) réduit une vitesse à laquelle le vilebrequin (12) tourne en sens inverse lorsque la pression atmosphérique (Pa) diminue.

4. Dispositif de redémarrage de moteur selon la revendication 1, dans lequel
le vilebrequin (12) tourne en sens inverse jusqu'à ce qu'il s'arrête en raison d'un couple insuffisant lorsque le vilebrequin (12) est renvoyé à l'angle correspondant au voisinage du point mort haut de compression (C/T).
